# EUROPÄISCHE PATENTSCHRIFT

(11) **EP 2 657 397 B1**
(45) Veröffentlichungstag und Bekanntmachung des Hinweises auf die Patenterteilung: **31.12.2014**
(21) Anmeldenummer: 13001756.9
(22) Anmeldetag: 05.04.2013
(51) Int. Cl.: D21B 1/32

(54) **Verfahren zur Auflösung von Faserstoffen**
Method for dissolving fibrous materials
Procédé de dissolution de matières fibreuses

(30) Priorität: 24.04.2012 AT 4972012
(43) Veröffentlichungstag der Anmeldung: 30.10.2013
(73) Patentinhaber: Andritz AG, 8045 Graz (AT)
(72) Erfinder: Bauer, Harald, 8045 Graz (AT); Gscheider, Alexander, 8785 Hohentauern (AT)
(74) Vertreter: Tschinder, Thomas

(56) Entgegenhaltungen:
- EP-A1- 1 420 108
- DE-A1-102012 205 721
- US-A- 6 083 350

## Beschreibung

Den Gegenstand dieser Erfindung bildet ein Verfahren zur Auflösung von Faserstoffen, insbesondere zur Auflösung von Altpapier. Die Faserstoffe werden dabei einem Niederkonsistenz Stoffauflöser (Pulper) zugeführt und dort mit Hilfe eines Rotors mit Wasser vermischt und zumindest teilweise aufgelöst.

Ein derartiges Verfahren ist z.B. aus dem Dokument EP 1420108 A1 bekannt.

Bisher war es insbesondere bei der Altpapieraufbereitung üblich, das Altpapier in einem Stoffauflöser (Pulper) aufzulösen und den Rejektstrom des Stoffauflösers einer sogenannten Entsorgungsmaschine zuzuführen, in der die Faserstoffsuspension gereinigt und entstippt wird. Das Rejekt aus der Entsorgungsmaschine, das dort bereits vorgewaschen werden kann, wird in der Regel zyklisch einer Waschtrommel zugeführt, in der das Rejekt gewaschen bzw. entwässert wird.

Je nach Anwendungsfall ist es durchaus üblich mehrere Auflöselinien parallel zu betreiben. Das Altpapier liegt dabei oft mit unterschiedlichen Qualitätsgraden vor. Für schwer auflösbares Altpapier wird oft das oben beschriebene Verfahren mit einem Pulper, mit einer oder mehrerer Entsorgungsmaschine(n), die auch mit zusätzlichen Rejektpumpe beaufschlagt sein können, und mit einer oder mehreren Waschtrommel(n) verwendet. Leichter aufzulösendes Altpapier wird jedoch oft in einem parallel laufenden Verfahren nur in einer Auflösetrommel aufgelöst. Der Betrieb derartiger Anlagen ist oft sehr energieintensiv.

Der Erfindung liegt daher die Aufgabe zugrunde, ein Verfahren zur Auflösung von Faserstoffen, insbesondere zur Auflösung von Altpapier, zu offenbaren, das je nach Altpapierqualität und Auflösekapazität des jeweiligen Auflöseverfahrens unterschiedlich durchgeführt werden kann.

Gelöst wird diese Aufgabe durch ein Verfahren, bei dem ein Teil der Faserstoffe (vorzugsweise schwerer auflösbares Altpapier)dem Stoffauflöser zugeführt wird und bei dem weitere Faserstoffe (vorzugsweise leichter auflösbares Altpapier) einer Auflösetrommel zugeführt werden. Zumindest ein Teil der dem Stoffauflöser zugeführten Faserstoffe wird nach dem Stoffauflöser der Auflösetrommel zur weiteren Auflösung zugeführt. Es handelt sich also um Faserstofflinien, die sowohl einen Stoffauflöser als auch eine Auflösetrommel beinhalten.

Bei dieser Ausführung lässt sich bei geeigneter Schaltung der einzelnen Aggregate sowohl eine deutliche Energiereduktion als auch eine Simplifizierung der Auflösesysteme erreichen.

Durch die Erfindung wird nun ein Verfahren bereitgestellt, mit dem Altpapier zuverlässig und energiesparend aufgelöst werden kann, selbst wenn es nicht immer die gleiche Qualität haben sollte.

Vorzugsweise wird zumindest ein Teil der aus dem Stoffauflöser kommenden Faserstoffe bzw. des Altpapiers, mit Hilfe zumindest einer Pumpe der Auflösetrommel zugeführt.

Unter Stoffauflöser wird im Sinne dieser Erfindung ein Pulper verstanden, mit einem offenen Behälter, dem die Faserstoffe bzw. das Altpapier und (Prozess)Wasser zugeführt werden. Im Behälter befindet sich ein Rotor, der die Auflösung der Faserstoffe unterstützt und beschleunigt.

Unter Auflösetrommel wird im Sinne dieser Erfindung eine im Wesentlichen waagrechte bis leicht geneigte Trommel verstanden, die um ihre Achse rotiert und in deren Inneren die Faserstoffe aufgelöst und in weitere Folge auch vom Rejekt (Störstoff)getrennt werden.

Im Stoffauflöser erfolgt normalerweise eine Aufteilung der Faserstoffe in einen Rejektstrom, der Faserstoffe und Störstoffe enthält, und in einen Gutstoffstrom, der überwiegend Faserstoffe und nur einen relativ geringen Störstoffanteil enthält. Diese Aufteilung ist jedoch im Rahmen dieser Erfindung nicht immer erforderlich.

In einem ersten Durchführungsbeispiel des Verfahrens wird die gesamte Fasersuspension aus dem Stoffauflöser der Auflösetrommel zugeführt. Dabei ist es vorteilhaft, die Faser/Störstoff-Suspension einer Schwerteilabscheidung basierend auf Sedimentation zu unterziehen, bevor sie der Auflösetrommel zugeführt wird. Diese Betriebsvariante ist gut anwendbar, wenn der Durchsatz durch den Stoffauflöser (Niedrigkonsistenz Stoffauflöserkapazität) 20% des Durchsatzes (Feststoffmasse) durch die Auflösetrommel (Auflösetrommelkapazität) nicht übersteigt. Wenn also die Menge (Masse) an Feststoffen, die dem Stoffauflöser zugeführt wird, nur maximal 20 % der Feststoffmenge (Masse) ausmacht, die der Auflösetrommel zugeführt wird.

In diesem Fall wird der Stoffauflöser (der Pulper)primär für eine Vorauflösung der Faserstoffe verwendet, die eigentliche Auflösung erfolgt dann in der Auflösetrommel. Bei dieser Betriebsvariante ist es möglich, dass der Stoffauflöser ohne ein Siebblech unterhalb des Rotors betrieben wird. Dadurch wird auch der Verschleiß am Stoffauflöser reduziert bzw. kann dadurch ein Verschleißteil - das Siebblech - eingespart werden. Die voraufgelösten Faserstoffe können den Stoffauflöser entweder über den Gutstoffauslass und den Rejektauslass verlassen oder aber nur über einen dieser beiden Auslässe.

In einem zweiten Durchführungsbeispiel des Verfahrens erfolgt im Stoffauflöser eine Aufteilung der Faserstoffe in einen Rejektstrom (Rejekte aber auch Faserstoffe) und in einen Gutstoffstrom (mehrheitlich Faserstoff mit geringem Rejektanteil. Der gesamte Rejektstrom aus dem Stoffauflöser wird vorzugsweise über eine Rejektpumpe der Auflösetrommel zugeführt. Dabei ist es vorteilhaft, den Rejektstrom, bestehend aus Störstoffen und Faserstoffsuspension, einer Schwerteilabscheidung basierend auf Sedimentation zu unterziehen, bevor sie der Auflösetrommel zugeführt wird.

Diese zweite Betriebsvariante ist gut anwendbar, wenn der Durchsatz (bezogen auf die Feststoffmasse) durch den Stoffauflöser (Niedrigkonsistenz Stoffauflöserkapazität) im Bereich von 20 - 100% des Durchsatzes durch die Auflösetrommel (Auflösetrommelkapazität) liegt.

Im Vergleich zu herkömmlichen Auflösesystemen wird bei dieser Betriebsvariante durch die Verwendung der Auflösetrommel eine Entsorgungsmaschine und eine Waschtrommel überflüssig.

In einem dritten Durchführungsbeispiel des Verfahrens erfolgt ebenfalls im Stoffauflöser eine Aufteilung der Faserstoffe in einen Rejektstrom und in einen Gutstoffstrom, wobei der Rejektstrom aus dem Stoffauflöser vorzugsweise über eine Rejektpumpe mit vorzugsweise vorgeschalteter Schwerteilabscheidung einer Entsorgungsmaschine zugeführt wird. Nur der Rejektstrom aus der Entsorgungsmaschine wird dann der Auflösetrommel zugeführt.
Diese dritte Betriebsvariante ist dann gut anwendbar, wenn der Durchsatz durch den Stoffauflöser (Niedrigkonsistenz Stoffauflöserkapazität) den Durchsatz durch die Auflösetrommel (Auflösetrommelkapazität)übersteigt. Wenn also die dem Stoffauflöser zugeführte Feststoffmasse größer ist, als die Feststoffmasse, die der Auflösetrommel zugeführt wird.

Durch diese Betriebsvariante kann die Entsorgungsmaschine im Vergleich zu herkömmlichen Systemen kontinuierlich betrieben werden, wodurch die Baugröße der Entsorgungsmaschine verkleinert werden kann. Dabei wird im Vergleich zu herkömmlichen Systemen deutlich weniger Energie verbraucht. Außerdem wird der Verschleiß in der Entsorgungsmaschine reduziert. Eine Waschtrommel ist nicht erforderlich.

Bei allen Betriebsvarianten ist es günstig, wenn der Rejektstrom aus dem Stoffauflöser durch einen direkt an den Stoffauflöser angrenzenden Sedimentationsturm oder Sedimentationsbehälter (Schwerteilabscheider) geleitet wird, damit sich darin Schwerteile wie Glas oder Metallteile abscheiden können.

Es ist auch günstig, wenn die vom Stoffauflöser kommende Faserstoffsuspension eingedickt wird, bevor sie der Auflösetrommel zugeführt wird.
Im Folgenden werden die drei Betriebsvarianten des erfindungsgemäßen Verfahrens anhand von Zeichnungen beschrieben. Es zeigen:
Fig. 1 ein Verfahrensschema zur Auflösung von Altpapier nach dem Stand der Technik.
Fig. 2 ein Verfahrensschema für eine erste Betriebsvariante des erfindungsgemäßen Verfahrens.
Fig. 3 ein weiteres Verfahrensschema für eine erste Betriebsvariante des erfindungsgemäßen Verfahrens.
Fig. 4 ein Verfahrensschema für eine zweite Betriebsvariante des erfindungsgemäßen Verfahrens.
Fig. 5 ein Verfahrensschema für eine dritte Betriebsvariante des erfindungsgemäßen Verfahrens.

Gleiche Bezugszeichen in den Figuren bezeichnen jeweils gleiche Bauteile bzw. Stoffströme.

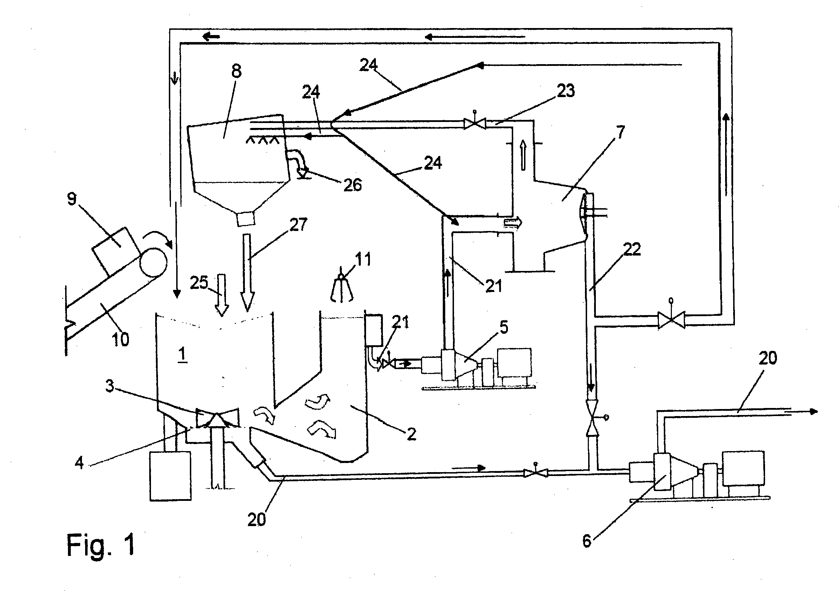

In Figur 1 ist ein herkömmliches Verfahrensschema für die Auflösung von Altpapier dargestellt. Dabei werden Faserstoffe 9, also Altpapierballen, über ein Förderband 10 einem Stoffauflöser 1 (Pulper) zugeführt. Im Stoffauflöser 1 wird das Altpapier mit Wasser 25 vermischt, dabei löst sich das Altpapier auf und bildet eine Faserstoffsuspension. Die Stoffauflösung im Pulper 1 wird dabei durch den Rotor 3 unterstützt. Ein Großteil der aufgelösten Fasern gelangt über das Sieb 4 unterhalb des Rotors 3 in einen Gutstoffraum, aus dem der Gutstoffstrom 20 aus dem Stoffauflöser 1 abgeführt wird. Dieser Gutstoffstrom 20 wird dann über eine Gutstoffpumpe 6 zur weiteren Verarbeitungen anderen Aggregaten zugeführt.

Ein Teil der Faserstoffsuspension und insbesondere die im Altpapier enthaltenen Störstoffe verlassen als Rejektstrom 21 den Stoffauflöser 1 und gelangen in den Sedimentationsturm 2. Im Sinne dieser Erfindung wird unter dem Rejektstrom 21 ein Stoffstrom verstanden, der sowohl Faserstoffe also auch Störstoffe enthält. Der Rejektstrom 21 verlässt über einen Überlauf den Sedimentationsturm 2 und wird über eine Rejektpumpe 5 einer Entsorgungsmaschine 7 (De-Trasher) zugeführt. Dies kann auch ohne Rejektpumpe 5 erfolgen wenn die Entsorgungsmaschine 7 unterhalb des Überlaufniveaus angeordnet ist.

Die Schwerteile werden periodisch mit einem Greifer 11 aus dem Sedimentationsturm 2 entfernt. Es ist allerdings auch denkbar, dass am unteren Ende des Sedimentationsbehälters eine Schleuse angeordnet ist, welche die Schwerteile zyklisch austrägt.

In der Entsorgungsmaschine 7 wird die Faserstoffsuspension, also der Rejektstrom 21(Fasersuspensionsstrom und Störstoffstrom), gereinigt und entstippt (deflaked). Dies erfolgt mit Hilfe eines Rotors und eines Sortiersiebes, das der Gutstoff 22 passieren muss. Entsorgungsmaschinen 7, sogenannte Detrasher, werden oft auch als Reinigungsmaschinen oder Sekundärpulper bezeichnet.

Die Entsorgungsmaschine 7 wird in der Regel zyklisch betrieben. Dabei wird in einem ersten Verfahrensschritt der Rejektstrom 21 aus dem Stoffauflöser 1 der Entsorgungsmaschine 7 zugeführt und der Gutstoff 22 aus dem Gutstoffraum hinter dem Sortiersieb abgezogen. Bei diesem Schritt, der auch als Gutstoffabfuhr (accept cycle) bezeichnet wird, reichert sich Rejekt in der Entsorgungsmaschine 7 an. Der Gutstoffstrom 22 aus der Entsorgungsmaschine 7 wird entweder wieder dem Stoffauflöser 1 zugeführt oder aber mit dem Gutstoffstrom 20 aus dem Stoffauflöser 1 vereint.

In einem zweiten Verfahrenschritt wird dann die Gutstoffabfuhr 22 geschlossen und das in der Entsorgungsmaschine 7 angesammelte Rejekt nachbehandelt, insbesondere entstippt. Oft wird auch der Begriff "repulping process" für diesen Verfahrensschritt verwendet.

Nach der Enstippung wird in einem dritten Verfahrensschritt die Gutstoffabfuhr 22 wieder geöffnet und das Rejekt in der Entsorgungsmaschine 7 mit Prozesswasser 24 gespült, dadurch wird das Rejekt gewaschen und Fasern werden in den Gutstoffstrom 22 gespült.

Schlussendlich wird in einem vierten Verfahrensschritt die Gutstoffabfuhr 22 wieder geschlossen und das gewaschene Rejekt als Rejektstrom 23 ausgeschleust und einer Waschtrommel 8 zugeführt und dort mit Hilfe von Wasser 24 nochmals gewaschen und entwässert. Der Gutstoffstrom 27 aus der Waschtrommel 8 wird wieder dem Stoffauflöser 1 zugeführt und das gewaschene Rejekt 26 entsorgt.

Anschließend beginnt der Zyklus wieder von vorne mit dem ersten Verfahrensschritt. Der Rejektstrom 23 aus der Entsorgungsmaschine 7 wird also bei herkömmlichen Verfahren zyklisch der Waschtrommel 8 zugeführt.

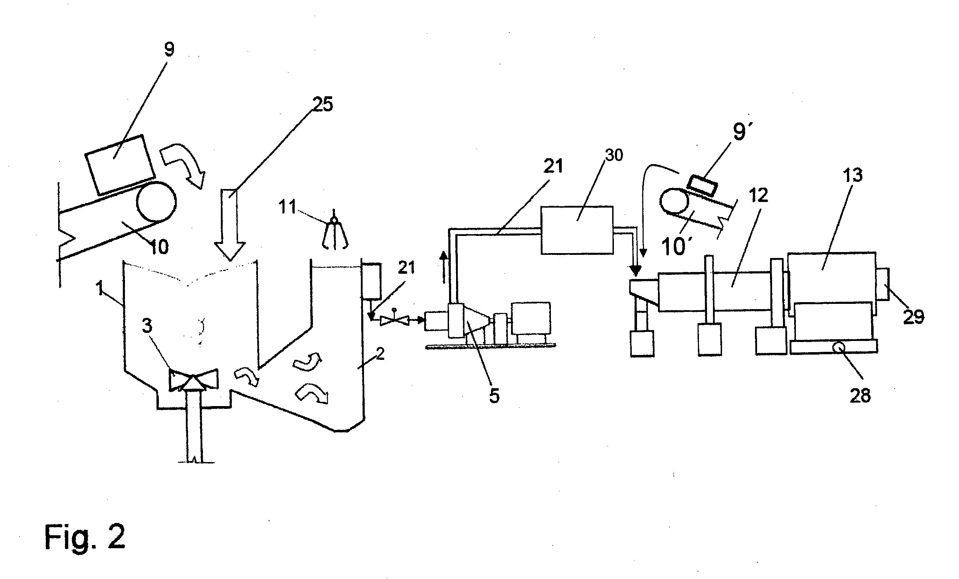

Figur 2 stellt eine erste Betriebsvariante des erfindungsgemäßen Verfahrens dar.
Dabei wird ein Teil der Faserstoffe 9 über ein Förderband dem Stoffauflöser 1 zugeführt. Ein weiterer Teil der Faserstoffe 9' wird über ein Förderband 10' der Auflösetrommel 12 zugeführt. Bei den Faserstoffen 9 handelt es sich vorzugsweise um hochwertigeres Altpapier, das schwerer auflösbar ist. Bei den Faserstoffen 9' handelt sich primär um leicht auflösbares meist minderwertiges Altpapier, das auch in einer Auflösetrommel 12 gut aufgelöst werden kann.

Bei dieser ersten Betriebsvariante wird der gesamte Faserstoffstrom (Fasersuspension und Störstoffstrom) aus dem Stoffauflöser 1 nach Abscheidung von Schwerteilen im Sedimentationsturm 2 oder Sedimentationsbehälter als Rejektstrom 21 der Auflösetrommel 12 zugeführt. Diese Zufuhr erfolgt hier mit Hilfe einer Rejektpumpe 5. Der Stoffauflöser 1 wird dabei ohne Siebblech unterhalb des Rotors 3 betrieben. Vor der Auflösetrommel 12 ist hier optional ein Eindicker 30 angeordnet, durch den der Rejektstrom 21 von einem Feststoffgehalt von beispielsweise 3-5% auf einen Feststoffgehalt von beispielsweise 15-25% eingedickt wird.

Die Schwerteile werden periodisch mit einem Greifer 11 aus dem Sedimentationsturm 2 entfernt. Es ist allerdings auch denkbar, dass am unteren Ende des Sedimentationsbehälters 2 eine Schleuse angeordnet ist, welche die Schwerteile zyklisch austrägt.

Bei dieser ersten Betriebsvariante funktioniert der Stoffauflöser 1 primär als Vorauflöser, die eigentliche Faserstoffauflösung erfolgt in der Auflösetrommel 12.

Hinter der Auflösetrommel 12 befindet sich ein Sortierteil 13, in dem die Faserstoffsuspension in einen Gutstoffstrom 28 und in einen Rejektstrom 29 aufgeteilt wird.

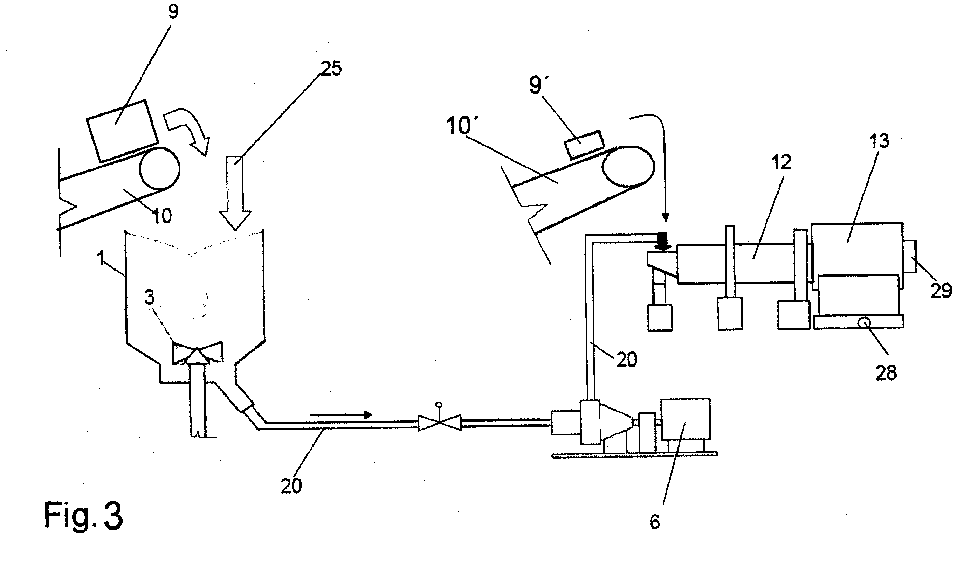

Figur 3 stellt ein weiteres Ausführungsbeispiel der ersten Betriebsvariante des erfindungsgemäßen Verfahrens dar. Hierbei wird jedoch der gesamte Faserstoffstrom 20 (Faserstoffe und Störstoffe)aus dem Stoffauflöser 1 als Gutstoffstrom 20 über die Gutstoffpumpe 6 der Auflösetrommel 12 zugeführt. Auch hier wird der Stoffauflöser 1 ohne Siebblech unterhalb des Rotors 3 betrieben. Schwerteile können hier über eine Schwerteilschleuse (nicht dargestellt), die am Boden des Stoffauflösers 1 montiert ist, entfernt werden.

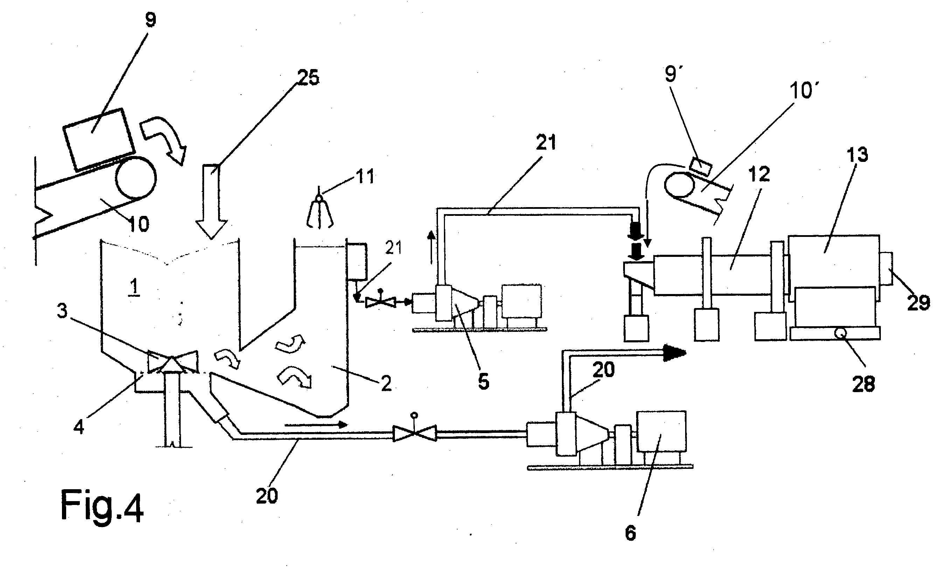

In Fig. 4 ist eine zweite Betriebsvariante des erfindungsgemäßen Verfahrens dargestellt. Auch hier wird ein Teil der Faserstoff 9 dem Stoffauflöser 1 und ein weiterer Teil der Faserstoffe 9' der Auflösetrommel 12 zugeführt.
Im Stoffauflöser 1 erfolgt eine teilweise Auflösung der Faserstoffe 9. Die aufgelösten Fasern verlassen über das Sieb 4 als Gutstoff 20 den Stoffauflöser 1. Der gesamte Rejektstrom 21 des Stoffauflösers 1 wird mit Hilfe der Rejektpumpe 5 der Auflösetrommel 12 zugeführt. Zuvor können Schwerteile, die im Rejektstrom 21 enthalten sind, im Schwerteilabscheider 2 abgeschieden werden. Optional kann auch hier der Rejektstrom 21 vor der Zufuhr zur Auflösetrommel 12 eingedickt werden.

Der Gutstoffstrom 20 aus dem Stoffauflöser wird mit Hilfe der Gutstoffpumpe 6 an der Auflösetrommel 12 vorbei weiteren Aggregaten zugeführt.

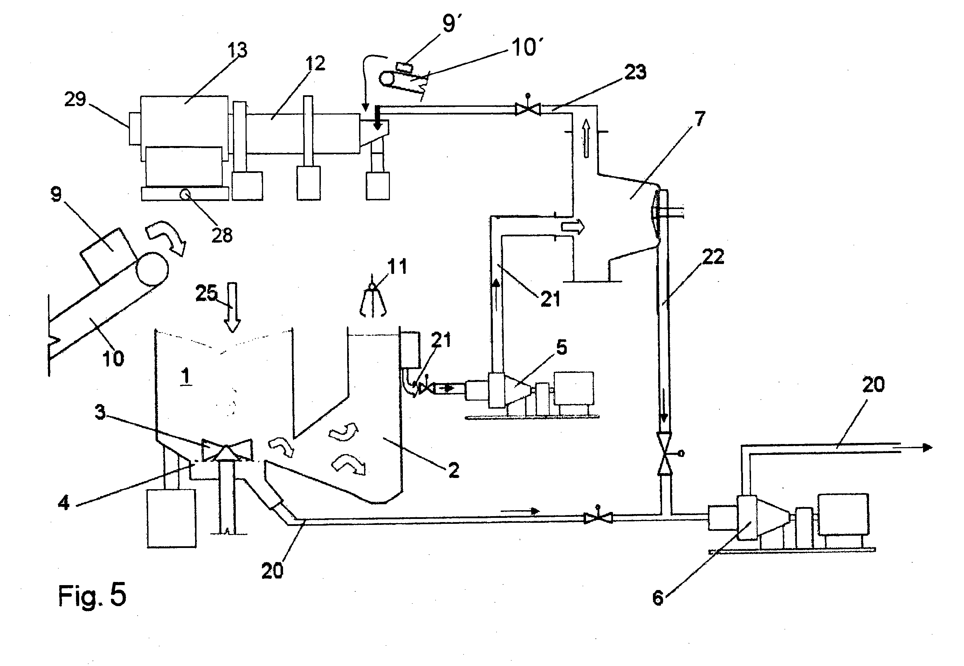

Fig. 5 zeigt eine dritte Betriebsvariante des erfindungsgemäßen Verfahrens. Auch hier wird ein Teil der Faserstoff 9 dem Stoffauflöser 1 und ein weiterer Teil der Faserstoffe 9' der Auflösetrommel 12 zugeführt.
Im Stoffauflöser 1 erfolgt ebenso wie in der zweiten Betriebsvariante eine Aufteilung in einen Rejektstrom 21 und in einen Gutstoffstrom 20.
Der Rejektstrom 21 aus dem Stoffauflöser 1 wird einer Entsorgungsmaschine 7 zugeführt. Der Gutstoffstrom 22 aus der Entsorgungsmaschine 7 wird mit dem Gutstoffstrom 20 aus dem Stoffauflöser 1 vereint. Der Rejektstrom 23 aus der Entsorgungsmaschine 7 wird der Auflösetrommel 12 zugeführt und dort weiterbehandelt.
Diese dritte Betriebsvariante bietet sich an, wenn die Menge an Faserstoffen 9, die dem Stoffauflöser 1 zugeführt werden, größer ist, als die Menge an Faserstoffen 9', die in der Auflösetrommel 12 behandelt werden.
Auch bei dieser Betriebsvariante kann vor der Auflösetrommel 12 eine Eindickung des Rejektstrom 23 erfolgen.

## Patentansprüche

1. Verfahren zur Auflösung von Faserstoffen (9, 9'), insbesondere zur Auflösung von Altpapier, wobei ein Teil der Faserstoffe (9) einem Stoffauflöser (1) zugeführt wird und dort mit Hilfe eines Rotors (3) mit Wasser (25) vermischt und zumindest teilweise aufgelöst wird, **dadurch gekennzeichnet, dass** weitere Faserstoffe (9') einer Auflösetrommel (12) zugeführt werden und dass zumindest ein Teil (20, 21, 23) der dem Stoffauflöser (1) zugeführten Faserstoffe (9) nach dem Stoffauflöser (1) der Auflösetrommel (12) zur weiteren Auflösung zugeführt wird.

2. Verfahren nach Anspruch 1, **dadurch gekennzeichnet, dass** der zumindest eine Teil (20, 21, 23) der aus dem Stoffauflöser (1) kommenden Faserstoffe (9) mit Hilfe einer Pumpe (5, 6) der Auflösetrommel (12) zugeführt wird.

3. Verfahren nach Anspruch 1 oder 2, **dadurch gekennzeichnet, dass** im Stoffauflöser (1) eine Aufteilung der Faserstoffe (9) in einen Rejektstrom (21), der auch Faserstoffe (9) enthält, und in einen Gutstoffstrom (20), der mehrheitlich Faserstoffe (9) enthält, erfolgt.

4. Verfahren nach einem der Ansprüche 1 bis 3, **dadurch gekennzeichnet, dass** alle Faserstoffe (9) aus dem Stoffauflöser (1) der Auflösetrommel (12) zugeführt werden.

5. Verfahren nach Anspruch 3, **dadurch gekennzeichnet, dass** nur der Rejektstrom (21) aus dem Stoffauflöser (1) zumindest teilweise der Auflösetrommel (12) zugeführt wird.

6. Verfahren nach Anspruch 5, **dadurch gekennzeichnet, dass** der gesamte Rejektstrom (21) aus dem Stoffauflöser (1) der Auflösetrommel (12) zugeführt wird.

7. Verfahren nach Anspruch 5, **dadurch gekennzeichnet, dass** der Rejektstrom (21) aus dem Stoffauflöser (1) einer Entsorgungsmaschine (7) zugeführt wird und dass ein Rejektstrom (23) aus der Entsorgungsmaschine (7) der Auflösetrommel (12) zugeführt wird.

8. Verfahren nach Anspruch 7, **dadurch gekennzeichnet, dass** der Rejektstrom (23) aus der Entsorgungsmaschine (7) kontinuierlich der Auflösetrommel (12) zugeführt wird.

9. Verfahren nach einem der Ansprüche 5 bis 8, **dadurch gekennzeichnet, dass** der Rejektstrom (21) aus dem Stoffauflöser (1) durch eine Sedimentationsvorrichtung (2) geführt wird, bevor er zumindest teilweise der Auflösetrommel (12) zugeführt wird.

10. Verfahren nach einem der Ansprüche 1 bis 9, **dadurch gekennzeichnet, dass** der zumindest eine Teil (20, 21, 23) der aus dem Stoffauflöser (1) kommenden Faserstoffsuspension eingedickt wird, bevor er der Auflösetrommel (12) zugeführt wird.

## Claims

1. Process for pulping of fibrous materials (9, 9'), particularly for pulping waste paper, where one part of the fibrous materials (9) is fed to a pulper (1), mixed there with water (25) with the aid of a rotor (3), and at least partly pulped, **characterized by** other fibrous materials (9') being fed to a drum pulper (12) and by the at least one part (20, 21, 23) of the fibrous materials (9) fed to the pulper (1) being fed to the drum pulper (12) for further pulping after the pulper (1).

2. Process according to Claim 1, **characterized by** the at least one part (20, 21, 23) of the fibrous materials (9) coming from the pulper (1) being fed to the drum pulper (12) with the aid of a pump (5, 6).

3. Process according to Claim 1 or 2, **characterized by** the fibrous materials (9) being divided in the pulper (1) into a reject flow (21) also containing fibrous materials (9) and an accept flow (20) largely containing fibrous materials (9).

4. Process according to one of Claims 1 to 3, **characterized by** all the fibrous materials (9) from the pulper (1) being fed to the drum pulper (12).

5. Process according to Claim 3, **characterized by** only the reject flow (21) from the pulper (1) being fed at least partly to the drum pulper (12).

6. Process according to Claim 5, **characterized by** the entire reject flow (21) from the pulper (1) being fed to the drum pulper (12).

7. Process according to Claim 5, **characterized by** the reject flow (21) from the pulper (1) being fed to a detrasher (7) and by a reject flow (23) from the de-trasher (7) being fed to the drum pulper (12).

8. Process according to Claim 7, **characterized by** the reject flow (23) from the de-trasher (7) being fed continuously to the drum pulper (12).

9. Process according to one of Claims 5 to 8, **characterized by** the reject flow (21) from the pulper (1) being fed through a sedimentation device (2) before being fed at least partly to the drum pulper (12).

10. Process according to one of Claims 1 to 9, **characterized by** the at least one part (20, 21, 23) of the fiber pulp suspension coming from the pulper (1) being thickened before it is fed to the drum pulper (12).

## Revendications

1. Méthode de pulpage de pâtes fibreuses (9, 9'), notamment pour le pulpage de vieux papiers, où une partie des pâtes fibreuses (9) est amenée à un pulpeur (1) et mélangeé dans ce pulpeur (1) avec de l'eau (25) à l'aide d'un rotor (3) et dissolue au moins partiellement, **caractérisée en ce que** d'autres pâtes fibreuses (9') sont amenées à un tambour pulpeur (12) et que, au moins une partie (20, 21, 23) des pâtes fibreuses (9) amenées au pulpeur (1) est amenée au tambour pulpeur (12) pour un pulpage supplémentaire en aval du pulpeur (1).

2. Méthode selon la revendication 1, **caractérisée en ce que** la au moins une partie (20, 21, 23) des pâtes fibreuses (9) provenant du pulpeur (1) est amenée au tambour pulpeur (12) moyennant une pompe (5, 6).

3. Méthode selon la revendication 1 ou 2, **caractérisée en ce que** dans le pulpeur (1), les pâtes fibreuses (9) sont séparées en un courant de pâtes rejetées (21), qui contient également des pâtes fibreuses (9) et un courant de pâtes acceptées (20), qui contient majoritairement des pâtes fibreuses (9).

4. Méthode selon l'une des revendications 1 à 3, **caractérisée en ce que** toutes les pâtes fibreuses (9) provenant du pulpeur (1) sont amenées au tambour pulpeur (12).

5. Méthode selon la revendication 3, **caractérisée en ce que** seul le courant de pâtes rejetées (21) provenant du pulpeur (1) est amené, au moins partiellement, au tambour pulpeur (12).

6. Méthode selon la revendication 5, **caractérisée en ce que** le courant de pâtes rejetées (21) provenant du pulpeur (1) est amené entièrement au tambour pulpeur (12).

7. Méthode selon la revendication 5, **caractérisée en ce que** le courant de pâtes rejetées (21) provenant du pulpeur (1) est amené à un déchargeur de déchets (7) et qu'un courant de pâtes rejetées (23) est amené à partir du déchargeur pour déchets (7) au tambour pulpeur (12).

8. Méthode selon la revendication 7, **caractérisée en ce que** le courant de pâtes rejetées (23) est amené en continu à partir du déchargeur pour déchets (7) au tambour pulpeur (12).

9. Méthode selon l'une des revendications 5 à 8, **caractérisée en ce que** le courant de pâtes rejetées (21) provenant du pulpeur (1) est mené à travers un dispositif de sédimentation (2) avant d'être amené, au moins partiellement, au tambour pulpeur (12).

10. Méthode selon l'une des revendications 1 à 9, **caractérisée en ce que** la au moins une partie (20, 21, 23) de la suspension de pâte provenant du pulpeur (1) est épaissie avant d'être amenée au tambour pulpeur (12).
